(19) Europäisches Patentamt / European Patent Office / Office européen des brevets

(11) **EP 2 570 706 A1**

(12) **EUROPEAN PATENT APPLICATION**

(43) Date of publication:
**20.03.2013  Bulletin 2013/12**

(51) Int Cl.:
***F16J 15/32*** *(2006.01)*

(21) Application number: **12181309.1**

(22) Date of filing: **22.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.09.2011  GB 201115773**

(71) Applicant: **Rolls-Royce plc**
**London SW1E 6AT (GB)**

(72) Inventor: **Franceschini, Gervas**
**Derby, Derbyshire DE23 1XP (GB)**

(74) Representative: **Gee, Philip David et al**
**Rolls-Royce plc**
**Intellectual Property**
**SinB-38, PO Box 31**
**Derby**
**Derbyshire DE24 8BJ (GB)**

(54) **Brush seal**

(57)    An annular brush seal 502 is disclosed comprising first and second annular clamp plates 504, 506, each clamp plate comprising an opposed annular clamping surface 512, 514, and a pack of radially extending bristles 508 clamped between the clamping surfaces 512, 514 of the clamp plates 504, 506. The clamping surface 512 of at least one of the clamp plates 504 is profiled, such that a separation between the clamping surfaces 512, 514 increases with decreasing radius.

A brush seal 102 is also disclosed comprising first and second clamp plates 104, 106, each clamp plate comprising an opposed clamping surface 112, 114, and a bristle pack 108 clamped between the clamping surfaces 112, 114 of the clamp plates 104, 106, wherein the clamping surface 112 of at least one of the clamp plates 104 comprises a linear surface feature 118, 116, 324 extending across the clamping surface 112 and causing a step change in the profile of the clamping surface 112.

Fig.7

**Description**

The present invention relates to brush seals, which may be in strip form for linear sealing applications, or in annular form for circular and non circular sealing applications.

**Background**

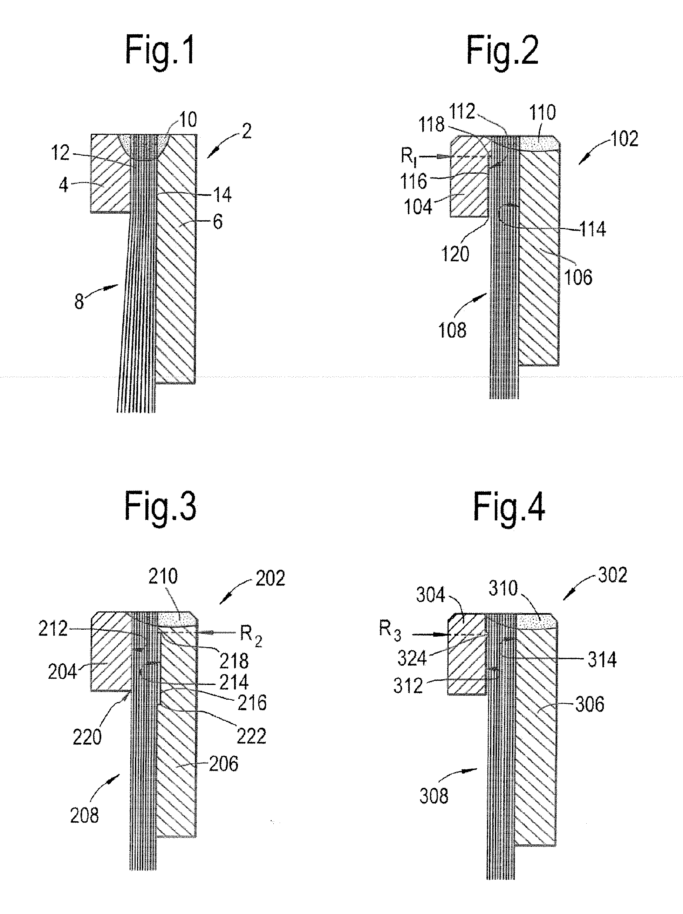

Brush seals are used in many industries and commonly take the form of a pair of clamping plates between which is clamped a bristle pack. The clamping plates may be of different heights, providing different levels of support to the bristles depending on the direction of application of force. A section through a conventional annular brush seal 2 is illustrated in Figure 1. The seal 2 comprises a first annular clamp plate 4, a second annular clamp plate 6 and a bristle pack 8 sandwiched between the plates 4, 6. A circumferential weld 10 is applied around the outer circumference of the seal 2 to attach the bristle pack 8 firmly to the first and second plates 4, 6. The clamping plates 4, 6 each comprise an opposed clamping surface 12, 14, that contacts the bristle pack 8 and over which a clamping force is applied to hold the bristle pack 8 in place. The clamping surfaces 12, 14 are planar and parallel, resulting in a substantially constant separation between the surfaces across the entire clamped region of the bristle pack 8. As illustrated in Figure 1, one of the first and second plates 4, 6, may be deeper in a bristle direction than the other of the plates, such that the bristle pack 8 is supported along a greater extent of its height on one side. In the seal 2 illustrated in Figure 1, the second plate 6 is deeper than the first plate 4, providing additional support to the bristle pack 8 on the right side of the bristle pack, as seen in the Figure.

It will be appreciated that the sectional view of Figure 1 is also representative of a linear brush seal having rectangular clamping plates 4, 6 and a linear bristle pack and outer edge weld.

During manufacture of a seal, the component parts of the seal are assembled and a clamping load is applied to the clamping plates 4, 6 while the weld operation takes place. The bristle pack 8 may contain a great number of individual bristles, and the packing arrangement of the bristles may vary across the clamped region of the bristle pack. Such variations in packing arrangement can impact upon the clamping load experienced across the bristle pack 8. The result is a bristle loading pattern that varies in an uncontrolled manner across the clamping region, with regions of maximum clamping load, where the bristles of the bristle pack are strongly constrained and unable to move, and regions of lesser loading, where some movement of the bristles is possible. These regions of greater and lesser clamping load cannot be accurately identified, meaning the precise location at which bristles are rigidly fixed, and hence the effective bristle length, is unknown. Even very small variations in clamping load applied to the plates, or in plate separation, during the weld operation can impact upon the effective length of the bristle pack. These variations also affect the weld depth around the circumferential or outer weld.

The uncontrolled nature of the variation in clamping means that the effective bristle length and the weld depth are not constant around any one seal or between seals, resulting in considerable variation in bristle pack behaviour. Such in-part and part-to-part variation in bristle pack behaviour can result in seal components being badly matched to the mechanical environment in which they are employed, and hence to substantial variation in component life.

Issues of bristle packing and clamping load variation are particularly acute in annular brush seals. Owing to the radially extending nature of the bristle pack, the same number of bristles must be packed into a cylindrical packing area that reduces with reducing radius. The packing density of bristles increases towards the radially inner edge of the clamping region, owing to the reduction in circumference with decreasing radius. Consequently, the clamping force experienced by the bristle back increases with decreasing radius. The deeper the clamping plates in the radial direction, the greater the variation in packing density, and hence in clamping load over the plates.

The present invention seeks to address some or all of the above mentioned disadvantages.

**Summary of Invention**

According to the present invention, there is provided an annular brush seal comprising first and second annular clamp plates, each clamp plate comprising an opposed annular clamping surface, and a pack of radially extending bristles clamped between the clamping surfaces of the clamp plates, wherein the clamping surface of at least one of the clamp plates is profiled, such that a separation between the clamping surfaces increases with decreasing radius.

The clamping surface may be profiled such that separation between the clamping surfaces is inversely proportional to radius. In this manner, it may be ensured that the cylindrical packing area available to the bristles remains substantially constant with changing radial location.

Both clamping surfaces may be profiled, the two profiles cooperating to provide the desired relationship between separation and radial location.

The profiled clamping surface may further comprise an annular surface feature causing a step change in the profile of the surface. A step change in the surface profile causes a corresponding step change in the load experienced by the bristle pack, thus providing a defined radial location of maximum loading.

The annular surface feature may comprise an annular shoulder. The annular shoulder may be arranged such that the step change in surface profile causes a step increase in clamping surface separation with a reduction in radius.

The annular surface feature may comprise an annular protrusion, such as an annular rib formed on the clamping surface.

The annular surface feature may comprise an annular recess. The annular recess may extend past a radially inner edge of a clamped region of the bristle pack.

The annular surface feature may comprise a cooperating protrusion and recess. The recess may be located on a radially inner side of the protrusion.

According to another aspect of the present invention, there is provided a brush seal comprising first and second clamp plates, each clamp plate comprising an opposed clamping surface, and a bristle pack clamped between the clamping surfaces of the clamp plates, wherein the clamping surface of at least one of the clamp plates comprises a linear surface feature extending across the clamping surface and causing a step change in the profile of the clamping surface.

A step change in the clamping surface causes a corresponding step change in the load experienced by the bristle pack, thus providing a defined radial location of maximum loading.

The linear surface feature may extend across the clamping surface substantially to the full extent of the bristle pack clamped between the clamping surfaces.

The surface feature may comprise an integral feature of the clamp plate. Alternatively, the surface feature may comprise a separate component cooperating with the clamp plate.

The surface feature may comprise a shoulder. The shoulder may be arranged such that the step change in surface profile causes a step increase in clamping surface separation in a direction towards the free ends of the bristles.

The surface feature may comprise a protrusion, such as a rib formed on the clamping surface.

The surface feature may comprise a recess. The recess may extend past an inner edge of a clamped region of the bristle pack.

The surface feature may comprise a cooperating protrusion and recess. The recess may be located on an inner side of the protrusion.

The brush seal may comprise an annular seal. The clamp plates may comprise annular clamping surfaces and the surface feature may comprise an annular surface feature.

## Brief Description of Drawings

For a better understanding of the present invention, and to show how it may be carried into effect, reference will now be made, by way of example, to the following drawings, in which:-

Figure 1 is a sectional view of a conventional annular brush seal;

Figures 2 and 3 are sectional views of a seals having a recessed clamping plate;

Figure 4 is a sectional view of a seal having a protrusion on a clamping surface;

Figure 5 is a sectional view of a seal having a cooperating protrusion and recess on a clamping surface;

Figure 6 is a sectional view of a seal having a profiled clamping plate; and

Figure 7 is a sectional view of a seal having a protrusion formed on a profiled clamping plate.

## Detailed description of Embodiments

The present invention addresses the disadvantages of the prior art in two ways. The increased packing density experienced at radially inner locations of annular seals is addressed by profiling the clamping surface or surfaces, such that separation of the clamping surfaces varies inversely with radius, providing a substantially constant cylindrical packing area. This profiling may be combined with, or as an alternative to, a step change in the clamping surface, caused for example by a shoulder, recess or protrusion. Such a step change in clamping surface causes a corresponding step change in clamping force experienced by the bristle pack, hence defining a precise radial location for maximum axial loading. This location is then the location at which the bristles become fixed, and defines the effective length of the bristles. In this manner, variation in bristle free lengths is minimised and a more repeatable bristle clamping position is established. Aspects of the present invention thus allow for consistent and repeatable bristle pack behaviour around a single seal and between different seals.

With reference to Figure 2, a first embodiment of the present invention comprises an annular brush seal 102 having a first annular clamp plate 104, a second annular clamp plate 106 and a bristle pack 108 sandwiched between the plates 104, 106. A circumferential weld 110 is applied around the outer circumference of the seal 102 to attach the bristle pack 108 firmly to the first and second plates 104, 106. The clamping plates 104, 106 each comprise an opposed clamping surface 112, 114, that contacts the bristle pack 108 and over which a clamping force is applied to hold the bristle pack 108 in place. The clamping surfaces 112, 114 are planar and parallel. A first one of the clamping surfaces 112 comprises an annular recess 116 that commences at a shoulder 118 and extends from the shoulder 118 to the radially inner edge 120 of the clamping surface 112. The separation between the clamping surfaces 112, 114 is thus increased by the depth of the recess over the annular area of the recess. Consequently, the clamping force experienced by the bristle pack is reduced over this annular area. The maximum clamping force experienced by the bristle pack 108 is at the radial location of the shoulder 118 at which the recess commences. This is illustrated on the Figure as $R_1$. At this radial location, the bristles in the bristle pack become fixed, and the effective length of the bristle pack may thus be measured from this radial location.

Another embodiment of the present invention is illustrated in Figure 3. This embodiment largely corresponds to that of Figure 2, the seal 202 comprising first and second annular clamp plates 204, 206 and a bristle pack 208 sandwiched between the plates 204, 206. A circumferential weld 210 is applied around the outer circumference of the seal 202. As in Figure 2, the clamping plates 204, 206 each comprise an opposed clamping surface 212, 214, that contacts the bristle pack 208 and over which a clamping force is applied to hold the bristle pack 208 in place. In the embodiment of Figure 3, an annular recess 218 is formed on a second one of the clamping surfaces 216. The recess 216 commences at an annular shoulder 218 and extends radially inwardly past the radially inner extent 220 of the first clamping surface 214. The recess 216 performs a similar function to the recess 116 of the embodiment of Figure 2, effecting a step change in the clamping force experienced by the bristle back 208 and defining a radial location for maximum loading at the radially outer shoulder 218 where the recess commences. This radial location, illustrated as $R_2$ on the Figure, is the location at which the bristles in the bristle pack become fixed, and the effective length of the bristle pack may thus be measured from this radial location. The recess 216 may continue to the radially inner extent of the second clamping surface 214, or may terminate at a second radially inner shoulder 222. As illustrated in the Figure, the radially inner shoulder 222 is positioned radially inward of the radially inner extent of the first clamping surface 212, such that the separation between the clamping surfaces remains constant radially inward of the first shoulder 218.

Figure 4 illustrates another embodiment of the present invention, in which a defined radial location for maximum loading is provided by an annular rib or protrusion 324 formed on the first clamping surface 312. The seal 302 of Figure 4 comprises first and second clamping plates 304, 306 having opposed clamping surfaces 312, 314 and sandwiching a bristle pack 308 therebetween. An annular weld 310 extends around the outer circumference of the seal 302. An annular rib 324 protrudes from a first one of the clamping surfaces 312, providing a step change in the separation between the clamping surfaces 312, 314 at the radial location of the rib 324. This step change corresponds to a step increase in the clamping load experienced by the bristle pack 308, and hence provides a defined radial location for maximum axial loading experienced by the bristle pack 308. This radial location, illustrated as $R_3$ on the Figure, is the location at which the bristles in the bristle pack become fixed, and the effective length of the bristle pack may thus be measured from this radial location.

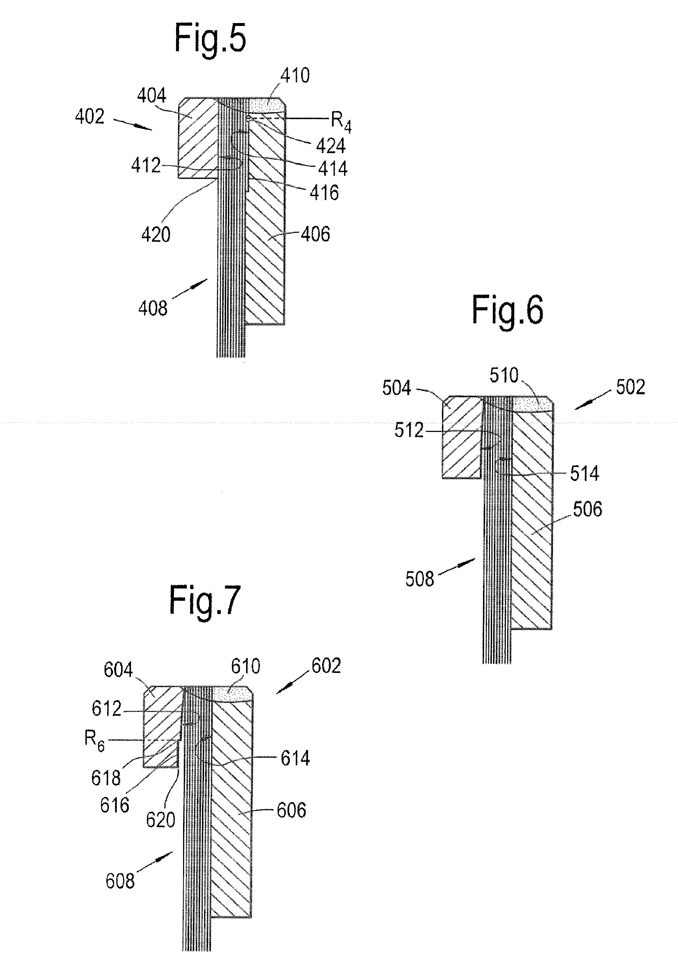

With reference to Figure 5, the annular rib of the embodiment of Figure 4 may be formed on either the first or the second clamp plate, and may optionally be combined with the recess of Figure 3. The embodiment of seal 402 shown in Figure 5 comprises first and second clamping plates 404, 406 having opposed clamping surfaces 412, 414 and sandwiching a bristle pack 408 therebetween. An annular weld 410 extends around the outer circumference of the seal 402. An annular rib 424 protrudes from a second one of the clamping surfaces 414, providing a step change in the separation between the clamping surfaces 412, 414 at the radial location of the rib 424. The rib 424 is combined with a recess 416, formed radially inwards of the rib 424 and extending radially inwardly past the radially inner extent 420 of the first clamping surface 414. The step change in separation between the clamping surfaces caused by the cooperating rib 424 and recess 416 corresponds to a step change in the clamping load experienced by the bristle pack 408. This change thus provides a defined radial location for maximum axial loading experienced by the bristle pack 408. This radial location, illustrated as $R_4$ on the Figure, is the location at which the bristles in the bristle pack become fixed, and the effective length of the bristle pack may thus be measured from this radial location.

As discussed above, the present invention also provides for the establishment of a uniform clamping load in an annular brush seal by profiling one or both of the clamping surfaces. A seal embodying this concept is illustrated in Figure 6. The seal 502 comprises a first annular clamp plate 504, a second annular clamp plate 506 and a bristle pack 508 sandwiched between the plates 504, 506. A circumferential weld 510 is applied around the outer circumference of the seal 502 to attach the bristle pack 508 firmly to the first and second plates 504, 506. The clamping plates 504, 506 each comprise an opposed clamping surface 512, 514, that contacts the bristle pack 508 and over which a clamping force is applied to hold the bristle pack 508 in place. A first one of the clamping surfaces 512 is profiled, such that the separation between the clamping surfaces increases with decreasing radius. The profile of the first clamping surface 412 is idealised to provide an inversely proportional relationship between separation of the clamping surfaces and radius. Such a relationship allows for the cylindrical packing area available to the bristle pack 508 to remain substantially constant, even as the radial location under consideration changes.

The cylindrical packing area available to the bristle pack at a radius r is calculated by the formula:

$$\text{Packing area} = 2\pi r s$$

where s is the separation distance between the clamping surfaces at the radius r.

Thus, with the parallel clamping surfaces of the prior art, a bristle pack must be forced into a cylindrical packing area that decreases towards the radially inner edge of the seal. In contrast, according to the present invention, the cylindrical packing area may remain constant with changing radius, owing to the clamping plate profiling that results in a relationship between separation s and radius r of:

$$s \propto \frac{1}{r}$$

It will be appreciated that this relationship represents an idealised form of the invention, and that the profile of the clamping surface 512 need not exactly match the ideal in order to deliver the advantages of the invention. The substantially constant packing area available to the bristle pack ensures that clamping force remains largely constant with changing radius, allowing greater control of bristle packing and more even distribution of packing load.

Features of the various embodiments of the invention described above may be combined in an advantageous manner, as illustrated for example in Figure 7. Figure 7 illustrates a seal 602 in which the profiled clamping surface of the embodiment of Figure 6 is combined with the recess of Figure 2. The seal 602 of Figure 7 comprises a first annular clamp plate 604, a second annular clamp plate 606 and a bristle pack 608 sandwiched between the plates 604, 606. A circumferential weld 610 is applied around the outer circumference of the seal 602 to attach the bristle pack 608 firmly to the first and second plates 604, 606. The clamping plates 604, 606 each comprise an opposed clamping surface 612, 614, that contacts the bristle pack 608 and over which a clamping force is applied to hold the bristle pack 608 in place. A first one of the clamping surfaces 612 is profiled, such that the separation between the clamping surfaces increases with decreasing radius. The profile preferably allows for an approximately inversely proportional relationship between the separation of the clamping surfaces and the radial location at which the separation is measured. The first one of the clamping surfaces 612 further comprises an annular recess 616 that commences at a shoulder 618 and extends from the shoulder 618 to the radially inner edge 620 of the clamping surface 612. The shoulder 618 at which the recess commences causes a step change in the clamping surface separation, and hence a step reduction in the clamping force experienced by the bristle pack 608 over the annular area of the recess. The maximum clamping force experienced by the bristle pack 608 is at the radial location of the shoulder 618 at which the recess commences. This is illustrated on the Figure as $R_6$. At this radial location, the bristles in the bristle pack become fixed, and the effective length of the bristle pack may thus be measured from this radial location.

The present invention thus addresses the key areas of bristle free length variability and weld process control, allowing for the formation of repeatable bristle packs, with little variation around a single part and also from part-to-part.

It will be appreciated that the invention may be applied to circular or non circular seals. The invention may also be applied to brush seal strips for linear sealing problems where a defined bristle or fibre length is necessary to reduce or remove variability in seal performance. The invention may be employed in any application where free fibre or bristle length is important, and particularly in applications where the bristle pack has a radially extending element; the reduction in cylindrical clamping area with radius causing ambiguity in the exact location of bristle or fibre clamping. The invention may be applied to metallic or non metallic seals used in gas or steam turbines, pumps or compressors.

**Claims**

1. An annular brush seal (102) comprising first (104) and second (106) annular clamp plates, each clamp plate comprising an opposed annular clamping surface (112, 114), and a pack (108) of radially extending bristles clamped between the clamping surfaces of the clamp plates, wherein the clamping surface of at least one of the clamp plates is profiled, such that a separation between the clamping surfaces increases with decreasing radius.

2. An annular brush seal as claimed in claim 1, wherein the clamping surface (512) is profiled such that separation between the clamping surfaces is inversely proportional to radial location.

3. An annular brush seal as claimed in claim 1 or 2, wherein the profiled clamping surface further comprises an annular surface feature causing a step change in the profile of the surface.

4. An annular brush seal as claimed in claim 3, wherein the annular surface feature comprises an annular shoulder (118, 218).

5. An annular brush seal as claimed in claim 3, wherein the annular surface feature comprises an annular protrusion (324).

6. An annular brush seal as claimed in claim 3, wherein the annular surface feature comprises an annular recess (116, 216).

7. A brush seal comprising first and second clamp plates, each clamp plate comprising an opposed clamping surface, and a bristle pack clamped between the clamping surfaces of the clamp plates, wherein the clamping surface of at least one of the clamp plates comprises a linear surface feature extending across the clamping surface and causing a step change in the profile of the clamping surface.

8. A brush seal as claimed in claim 7, wherein the linear surface feature extends across the clamping surface substantially to the full extent of the bristle pack clamped between the clamping surfaces.

9. A brush seal as claimed in claim 7 or 8, wherein the surface feature comprises an integral feature of the clamp plate.

10. A brush seal as claimed in claim 7 or 8, wherein the surface feature comprises a separate component cooperating with the clamp plate.

11. A brush seal as claimed in any one of claims 7 to 10, wherein the surface feature comprises a shoulder.

12. A brush seal as claimed in any one of claims 7 to 10, wherein the surface feature comprises a protrusion.

13. A brush seal as claimed in any one of claims 7 to 10, wherein the surface feature comprises a recess.

14. A brush seal as claimed in any one of claims 7 to 13, wherein the brush seal comprises an annular seal, the clamp plates comprising annular clamping surfaces and the surface feature comprising an annular surface feature.

# Fig.1

# Fig.2

# Fig.3

# Fig.4

# Fig.5

# Fig.6

# Fig.7

Europäisches
Patentamt

European
Patent Office

Office européen
des brevets

## EUROPEAN SEARCH REPORT

Application Number

EP 12 18 1309

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 965 108 A1 (UNITED TECHNOLOGIES CORP [US]) 3 September 2008 (2008-09-03)<br><br>* figures 2,4,5 *<br>----- | 1,3,4, 6-9,11, 13,14 | INV.<br>F16J15/32 |
| X | GB 2 021 210 A (ROLLS ROYCE) 28 November 1979 (1979-11-28)<br>* figure 3 *<br>----- | 1,2 | |
| X | EP 1 892 443 A1 (SIEMENS AG [DE]) 27 February 2008 (2008-02-27)<br>* figures 2,3 *<br>----- | 1,3,5,7, 10,12 | |
| X | EP 1 180 623 A2 (UNITED TECHNOLOGIES CORP [US]) 20 February 2002 (2002-02-20)<br>* figures 1,4 *<br>----- | 7-9, 11-14 | |
| X | EP 1 424 518 A2 (UNITED TECHNOLOGIES CORP [US]) 2 June 2004 (2004-06-02)<br>* the whole document *<br>----- | 1,3,7-9, 11,14 | |
| X | FR 2 626 646 A1 (MTU MUENCHEN GMBH [DE]) 4 August 1989 (1989-08-04)<br>* figure 3 *<br>----- | 1,3,4,6 | TECHNICAL FIELDS SEARCHED (IPC)<br><br>F16J |
| X | EP 1 715 223 A2 (UNITED TECHNOLOGIES CORP [US]) 25 October 2006 (2006-10-25)<br>* figure 3 *<br>----- | 1,3,4,6 | |

The present search report has been drawn up for all claims

| Place of search | Date of completion of the search | Examiner |
|---|---|---|
| Munich | 10 January 2013 | Revilla, Xavier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

**EP 2 570 706 A1**

## ANNEX TO THE EUROPEAN SEARCH REPORT
## ON EUROPEAN PATENT APPLICATION NO.

EP 12 18 1309

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2013

| Patent document cited in search report | | | Publication date | Patent family member(s) | | | Publication date |
|---|---|---|---|---|---|---|---|
| EP | 1965108 | A1 | 03-09-2008 | EP<br>US | 1965108<br>2008203671 | A1<br>A1 | 03-09-2008<br>28-08-2008 |
| GB | 2021210 | A | 28-11-1979 | NONE | | | |
| EP | 1892443 | A1 | 27-02-2008 | NONE | | | |
| EP | 1180623 | A2 | 20-02-2002 | EP<br>JP<br>US | 1180623<br>2002071027<br>6457719 | A2<br>A<br>B1 | 20-02-2002<br>08-03-2002<br>01-10-2002 |
| EP | 1424518 | A2 | 02-06-2004 | DE<br>EP<br>US | 60318806<br>1424518<br>2004100030 | T2<br>A2<br>A1 | 22-01-2009<br>02-06-2004<br>27-05-2004 |
| FR | 2626646 | A1 | 04-08-1989 | DE<br>FR<br>GB<br>IT<br>US | 3802653<br>2626646<br>2214998<br>1228063<br>5066024 | A1<br>A1<br>A<br>B<br>A | 03-08-1989<br>04-08-1989<br>13-09-1989<br>28-05-1991<br>19-11-1991 |
| EP | 1715223 | A2 | 25-10-2006 | DE<br>EP<br>EP<br>US<br>US | 60311197<br>1388695<br>1715223<br>2004026869<br>2006181029 | T2<br>A2<br>A2<br>A1<br>A1 | 03-05-2007<br>11-02-2004<br>25-10-2006<br>12-02-2004<br>17-08-2006 |

For more details about this annex : see Official Journal of the European Patent Office, No. 12/82

10